# EUROPÄISCHE PATENTSCHRIFT

(11) **EP 0 862 699 B1**
(45) Veröffentlichungstag und Bekanntmachung des Hinweises auf die Patenterteilung: **23.02.2000**
(21) Anmeldenummer: 96946012.0
(22) Anmeldetag: 21.11.1996
(51) Int. Cl.: F16B 5/12, B60J 10/00

(54) **ELEMENT ZUR BEFESTIGUNG EINER PROFILDICHTUNG**
COMPONENT FOR FASTENING A PROFILE SEAL
ELEMENT DE FIXATION D'UN ORGANE D'ETANCHEITE PROFILE

(30) Priorität: 25.11.1995 DE 19543971
(43) Veröffentlichungstag der Anmeldung: 09.09.1998
(73) Patentinhaber: MECANO RAPID GmbH, 69030 Heidelberg (DE); SAAR-GUMMIWERK GmbH, 66687 Wadern (DE)
(72) Erfinder: DEMEL, Otto, D-69124 Heidelberg (DE); SENFTLEBER, Markus, D-68723 Schwetzingen (DE); SEHR, Ralf, D-66679 Losheim (DE); MICHELS, Manfred, D-66620 Nonnweiler-Sitzerath (DE)
(74) Vertreter: Gornott, Dietmar, Dipl.-Ing.
(86) Internationale Anmeldenummer: DE9602260
(87) Internationale Veröffentlichungsnummer: WO9720147

(56) Entgegenhaltungen:
- BE-A- 658 440
- DE-A- 1 530 579
- DE-A- 1 575 105
- GB-A- 1 103 963

## Beschreibung

Die Erfindung betrifft ein Element zur Befestigung einer Profildichtung am Randstreifen eines Bleches, der von einer Nut in der Profildichtung umfaßt wird.

Insbesondere im Fahrzeugbau werden Profildichtungen häufig auf Randstreifen von Blechen aufgesetzt. Zur Erhöhung der Haltekraft sind dabei in der für den Blechrand vorgesehenen Nut zum Blechrand gerichtete Zungen vorgesehen. Die damit erzielbaren Haltekräfte reichen jedoch nicht für alle Anwendungsfälle aus, insbesondere nicht bei geringen Blechstärken.

Durch DE-A-1 575 105 ist eine Vorrichtung mit kontinuierlichem Klammerstreifen zur Anbringung von Zier- und Abdichtungsstreifen an einem Tragflansch bekanntgeworden, die vollständig in einem dehnbaren Überzugsmaterial eingebettet ist, was aus Kunststoff oder Gummi hergestellt sein kann. Beim Aufschieben einer solchen Vorrichtung auf den Rand kann jedoch das innerhalb des Klammerstreifens befindliche Überzugsmaterial beschädigt werden, so daß einerseits der Metallträger Lackbeschädigungen hervorrufen kann und andererseits die Beschädigungen des Überzugsmaterials bei späterer Beanspruchung weiter aufreißen können.

Aufgabe der vorliegenden Erfindung ist es daher, ein Befestigungselement anzugeben, das in Profildichtungen einvulkanisierbar bzw. einspritzbar ist und das der Profildichtung einen sicheren Halt auf dem Randstreifen des Bleches gibt, ohne eine auf dem Blech vorhandene Lackschicht zu beschädigen.

Diese Aufgabe wird erfindungsgemäß gelöst mit einem Element zur Befestigung einer Profildichtung am Randstreifen eines Bleches, der von einer Nut in der Profildichtung umfaßt wird, bestehend aus einer zum Einbetten in die Profildichtung ausgebildeten federnden Metallklammer mit zwei Schenkeln und aus einem U-förmigen Kunststoffteil, welches von der Metallklammer umfaßt wird und welches zum Umgreifen des Randstreifens und zur Bildung einer Zwischenlage zwischen der Metallklammer und dem Randstreifen ausgebildet ist, wobei der Abstand der Schenkel voneinander sich in Endbereichen der Schenkel verengt und an den Enden der Schenkel wieder erweitert, wobei das Kunststoffteil mit seiner Form an die verengten Bereiche zwischen den Schenkeln angepaßt ist und wobei das Kunststoffteil eine geringere Härte als die Metallklammer aufweist.

Das erfindungsgemäße Befestigungselement gibt der Profildichtung, in die es eingefügt ist, einen festen Halt und vermeidet ferner Beschädigungen einer auf dem Blech vorhandenen Schutzschicht, insbesondere einer Lackschicht.

Eine Weiterbildung der Erfindung besteht darin, daß außerhalb der verengten Bereiche der Schenkel das Kunststoffteil schmäler als der Abstand zwischen den Schenkeln ist. Durch diese Weiterbildung kann bei dem Einvulkanisieren bzw. Umspritzen des erfindungsgemäßen Befestigungselementes Gummi bzw. ein anderes für die Profildichtung vorgesehenes Material in den Zwischenraum zwischen die Metallklammer und das Kunststoffteil eindringen und somit eine feste Verbindung zwischen der Profildichtung und dem Befestigungselement bewirken.

Um während des Umspritzens des Befestigungselementes einen mittigen Sitz des Kunststoffteils innerhalb der Metallklammer zu sichern, ist bei einer vorteilhaften Ausgestaltung dieser Weiterbildung vorgesehen, daß außerhalb der verengten Bereiche die Schenkel der Metallklammer jeweils mindestens eine nach innen gerichtete Prägung zur Zentrierung des Kunststoffteils aufweisen.

Eine andere Weiterbildung der Erfindung verbessert die Fixierung des Kunststoffteils innerhalb der Metallklammer dadurch, daß das Kunststoffteil im Anschluß an die verengten Bereiche eine größere Breite aufweist als außerhalb der verengten Bereiche.

Eine andere Weiterbildung der Erfindung dient ebenfalls der Fixierung des Kunststoffteils in der Metallklammer und besteht darin, daß das Kunststoffteil mindestens einen in eine Öffnung der Metallklammer eingreifenden Vorsprung aufweist. Dabei wird insbesondere ein Verschieben in Richtung des Blechrandes dadurch verhindert, daß der Vorsprung ein quer zur Richtung des Blechrandes verlaufender Steg ist, der in einen am Ende des Schenkels offenen Schlitz eingreift.

Eine weitere Verbesserung des Halts der ersten Ausführungsform innerhalb der Profildichtung ist dadurch erzielbar, daß das Kunststoffteil trapezförmig ist, wobei die kürzere Seite am Blechrand verläuft und die längere Seite außerhalb der Enden der Schenkel der Metallklammer liegt. Bei dieser Weiterbildung dringt das Material der Profildichtung in die durch die Verkürzung des Kunststoffteils im Inneren der Metallklammer entstehenden dreieckförmigen Hohlräume.

Ein Ausführungsbeispiel der Erfindung ist in der Zeichnung anhand mehrerer Figuren dargestellt und in der nachfolgenden Beschreibung näher erläutert. Es zeigt:

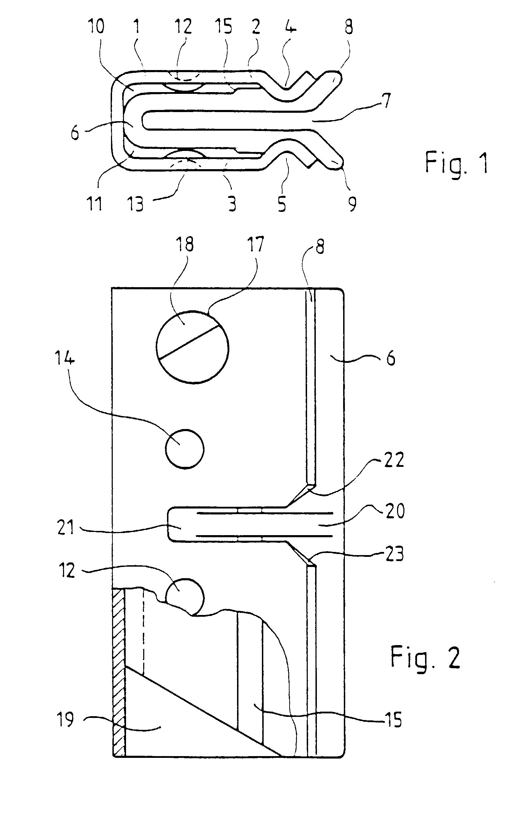

- Fig. 1: eine erste Ansicht und
- Fig. 2: eine zweite Ansicht des Ausführungsbeispiels.

Gleiche Teile sind in den Figuren mit gleichen Bezugszeichen versehen. Gegenüber den für das erfindungsgemäße Befestigungselement üblichen Abmessungen sind die Darstellungen stark vergrößert.

Das Ausführungsbeispiel besteht aus einer Metallklammer 1 mit zwei Schenkeln 2, 3, die an ihren Endbereichen 4, 5 nach innen und wieder nach außen gebogen sind, so daß sich der Abstand zwischen den Schenkeln 2, 3 dort verengt. Ein U-förmiges Kunststoffteil 6 bildet eine Nut 7, in die ein nicht dargestellter Randstreifen eines Bleches eingeführt wird. Dabei sind die Schenkel 2, 3 der Metallklammer 1 derart gegeneinander gebogen, daß eine vorspannung auf das Blech wirkt. Die Enden 8, 9 der Schenkel des U-förmigen Kunststoffteils 6 streben im Endbereich ebenso wie diejenigen der Metallklammer nach außen. Dadurch wird ein Einführen des Bleches erleichtert.

Das Kunststoffteil 6 ist innerhalb der Metallklammer 1 schmäler als der Abstand der Schenkel der Metallklammer, so daß Hohlräume 10, 11 entstehen, in die das Gummi bzw. ein anderes Material der Profildichtung beim Vulkanisieren bzw. Umspritzen eindringt. In den Schenkeln befinden sich nach innen gerichtete Prägungen 12, 13, 14, die das Kunststoffteil 6 innerhalb der Metallklammer 1 zentrieren. Im Anschluß an die Verengung der Metallklammer bei 4, 5 weist das Kunststoffteil 6 Stege 15, 16 auf, um ein Herausrutschen des Kunststoffteils 6 aus der Metallklammer 1 zu verhindern.

Die Schenkel 2, 3 der Metallklammer 1 weisen Löcher 17 auf, damit beim Umspritzen das Material der Profildichtung in die Hohlräume 10, 11 eindrigen kann. Durch die trapezförmige Ausbildung des Kunststoffteils 6 dringt ferner Material der Profildichtung in die dreieckförmigen Hohlräume 18, 19 ein, was einen Halt des Befestigungselementes in der Profildichtung verbessert.

Am Kunststoffteil 6 ist ein quer zum Blechrand verlaufender Steg 20 vorgesehen, der in einen seitlich offenen Schlitz 21 der Metallklammer 1 eingreift. Dadurch wird ein Verschieben des Kunststoffteils innerhalb der Metallklammer verhindert. Die Öffnung des Schlitzes 21 ist bei 22, 23 abgeschrägt, um ein Einsetzen des Kunststoffteils 6 in die Metallklammer 1 zu erleichtern.

## Patentansprüche

1. Element zur Befestigung einer Profildichtung am Randstreifen eines Bleches, der von einer Nut in der Profildichtung umfaßt wird, bestehend aus einer zum Einbetten in die Profildichtung ausgebildeten federnden Metallklammer (1) mit zwei Schenkeln (2, 3) und aus einem U-förmigen Kunststoffteil (6), welches von der Metallklammer (1) umfaßt wird und welches zum Umgreifen des Randstreifens und zur Bildung einer Zwischenlage zwischen der Metallklammer (1) und dem Randstreifen ausgebildet ist, wobei der Abstand der Schenkel (2, 3) voneinander sich in Endbereichen (4, 5) der Schenkel (2, 3) verengt und an den Enden (8, 9) der Schenkel (2, 3) wieder erweitert, wobei das Kunststoffteil (6) mit seiner Form an die verengten Bereiche (4, 5) zwischen den Schenkeln (2, 3) angepaßt ist und wobei das Kunststoffteil (6) eine geringere Härte als die Metallklammer (1) aufweist.

2. Befestigungselement nach Anspruch 1, dadurch gekennzeichnet, daß außerhalb der verengten Bereiche (4, 5) der Schenkel (2, 3) das Kunststoffteil (6) schmäler als der Abstand zwischen den Schenkeln (2, 3) ist.

3. Befestigungselement nach Anspruch 2, dadurch gekennzeichnet, daß außerhalb der verengten Bereiche (4, 5) die Schenkel (2, 3) der Metallklammer (1) jeweils mindestens eine nach innen gerichtete Prägung (12, 13, 14) zur Zentrierung des Kunststoffteils (6) aufweisen.

4. Befestigungselement nach einem der Ansprüche 2 oder 3, dadurch gekennzeichnet, daß das Kunststoffteil (6) im Anschluß an die verengten Bereiche (4, 5) eine größere Breite aufweist als außerhalb der verengten Bereiche.

5. Befestigungselement nach einem der Ansprüche 2 bis 4, dadurch gekennzeichnet, daß das Kunststoffteil (6) mindestens einen in eine Öffnung (21) der Metallklammer (1) eingreifenden Vorsprung (20) aufweist.

6. Befestigungselement nach Anspruch 5, dadurch gekennzeichnet, daß der Vorsprung (20) ein quer zur Richtung des Blechrandes verlaufender Steg ist, der in einen am Ende des Schenkels (2) offenen Schlitz (21) eingreift.

7. Befestigungselement nach einem der vorhergehenden Ansprüche, dadurch gekennzeichnet, daß das Kunststoffteil (6) trapezförmig ist, wobei die kürzere Seite am Blechrand verläuft und die längere Seite außerhalb der Enden der Schenkel (2, 3) der Metallklammer (1) liegt.

## Claims

1. Element for fixing a profile seal to the edging strip of a metal sheet, which strip is embraced by a groove in the profile seal, the element consisting of a resilient metal bracket (1), constructed to be embedded in the profile strip and having two side-pieces (2, 3), and of a U-shaped plastics part (6) which is embraced by the metal bracket (1) and which is constructed to engage around the edging strip and to form an intermediate layer between the metal bracket (1) and the edging strip, the distance of the side-pieces (2, 3) from one another narrowing in end zones (4, 5) of the side-pieces (2, 3) and broadening out again at the ends (8, 9) of the side-pieces (2, 3), the plastics part (6) being adapted in shape to the constricted zones (4, 5) between the side-pieces (2, 3) and the plastics part (6) being of a lesser hardness than the metal bracket (1).

2. Fixing element according to claim 1, characterised in that outside the constricted zones (4, 5) of the side-pieces (2, 3) the plastics part (6) is narrower than the distance between the side-pieces (2, 3).

3. Fixing element according to claim 2, characterised in that outside the constricted zones (4, 5) the side-pieces (2, 3) of the metal bracket (1) in each case feature at least one inwardly directed, embossed area (12, 13, 14) for centring the plastics part (6).

4. Fixing element according to either of claims 2 or 3, characterised in that the plastics part (6) has a greater width adjacent to the constricted zones (4, 5) than outside the constricted zones.

5. Fixing element according to any of claims 2 to 4, characterised in that the plastics part (6) features at least one projection (20) which engages in an opening (21) on the metal bracket (1).

6. Fixing element according to claim 5, characterised in that the projection (20) is a land which runs transverse to the direction of the periphery of the metal sheet and engages in a slot (21) which is open at the end of the side-piece (2).

7. Fixing element according to any of the preceding claims, characterised in that the plastics part (6) is trapezoidal, the shorter side running along the edge of the metal sheet and the longer side being situated outside the ends of the side-pieces (2, 3) of the metal bracket (1).

## Revendications

1. Élément de fixation d'un organe d'étanchéité profilé sur la bande de bordure d'une tôle qui est enserrée par une rainure prévue dans l'organe d'étanchéité profilé, constitué d'une pince métallique élastique (1) qui est conçue pour y insérer l'organe d'étanchéité profilé et comporte deux branches (2, 3) et une pièce en plastique en forme de U (6) qui est enserrée par la pince métallique (1) et qui est conçue pour enserrer la bande de bordure et former une couche intermédiaire entre la pince métallique (1) et la bande de bordure, la distance entre les branches (2, 3) se rétrécissant dans des zones d'extrémité (4, 5) des branches (2, 3) et s'élargissant à nouveau aux extrémités (8, 9) des branches (2, 3), la pièce en plastique (6), s'adaptant, par sa forme, aux zones rétrécies (4, 5) entre les branches (2, 3) et la pièce de plastique (6) présentant une dureté inférieure à celle de la pince métallique (1).

2. Élément de fixation selon la revendication 1, caractérisé par le fait qu'à l'extérieur des zones rétrécies (4, 5) des branches (2, 3), la pièce en plastique (6) est plus étroite que la distance entre les branches (2, 3).

3. Élément de fixation selon la revendication 2, caractérisé par le fait qu'à l'extérieur des zones rétrécies (4, 5) les branches (2, 3), de la pince métallique (1) présentent chacune au moins un embouti (12, 13, 14), orienté vers l'intérieur, pour centrer la pièce en plastique (6).

4. Élément de fixation selon l'une des revendications 2 ou 3, caractérisé par le fait qu'au raccordement aux zones rétrécies (4, 5), la pièce en plastique (6) présente une plus grande largeur qu'à l'extérieur des zones rétrécies.

5. Élément de fixation selon l'une des revendications 2 à 4, caractérisé par le fait que la pièce en plastique (6) présente au moins une saillie (20) venant en prise dans une ouverture (21) de la pince métallique (1).

6. Élément de fixation selon la revendication 5, caractérisé par le fait que la saillie (20) est une nervure qui est orientée perpendiculairement à la direction de la bordure de la tôle et vient en prise dans une fente ouverte (21) à l'extrémité de la branche (2).

7. Élément de fixation selon l'une des revendications précédentes, caractérisé par le fait que la pièce en plastique (6) est de forme trapézoïdale, le petit côté se trouvant du côté de la bordure de la tôle et le grand côté se trouvant à l'extérieur des extrémités des branches (2, 3) de la pince métallique (1).
